# EUROPEAN PATENT APPLICATION

(11) **EP 4 841 255 A1**
(43) Date of publication of application: **18.11.2026**
(21) Application number: 25884307.7
(22) Date of filing: 18.08.2025
(51) Int. Cl.: G01N 27/72

(54) **DEFECT DETECTION SENSOR, SYSTEM AND METHOD**

(30) Priority: 01.11.2024 CN 202411548814
(71) Applicant: China Oil & Gas Pipeline Network Corporation, Beijing 100013 (CN); Pipechina Institute of Science and Technology, Tianjin 300450 (CN)
(72) Inventor: CHEN, Pengchao, Tianjin 300450 (CN); DUAN, Jinyao, Tianjin 300450 (CN); LI, Rui, Tianjin 300450 (CN); FU, Kuan, Tianjin 300450 (CN); ZHENG, Jianfeng, Tianjin 300450 (CN); WANG, Yanan, Tianjin 300450 (CN); GUO, Zhenghong, Tianjin 300450 (CN)
(74) Representative: Cabinet Camus Lebkiri
(86) International application number: PCT/CN2025/115443
(87) International publication number: WO 2026/091788

(57) **Abstract**

A defect detection sensor, method and system. The defect detection sensor comprises: an orthogonal differential detection unit, a quantum magnetometer, and a magnetic shielding cylinder. The quantum magnetometer is arranged in the magnetic shielding cylinder, and the orthogonal differential detection unit is arranged outside the magnetic shielding cylinder. The orthogonal differential detection unit is used for: collecting a first magnetic field variation signal on the surface of a preset area of a preset component, and transmitting the first magnetic field variation signal to the quantum magnetometer, so as to apply the first magnetic field variation signal to alkali metal atoms of the quantum magnetometer. The quantum magnetometer is used for: when the first magnetic field variation signal is applied to the alkali metal atoms of the quantum magnetometer, generating a second magnetic field variation signal, so as to determine, on the basis of the second magnetic field variation signal, whether a defect is present in the preset area of the preset component.

## Description

This application claims priority to Chinese Patent Application No. 202411548814.9, filed on November 1, 2024, which is incorporated herein by reference in its entirety.

### TECHNICAL FIELD

The present disclosure relates to the field of detection technologies, and in particular, to a defect detection sensor and method based on quantum technology.

### BACKGROUND

Oil and gas pipelines are important infrastructure for national energy transportation, and their safe operation is of great significance for guaranteeing energy supply and maintaining national economic stability. However, a variety of defects, such as corrosion, wear, and cracks, may occur on oil and gas pipelines during long-term operation due to the influence of geological conditions, environmental factors, human operations and other factors. Such defects may lead to pipeline leakage or even serious accidents such as explosions. Therefore, regular inspections of the oil and gas pipelines are highly necessary.

### SUMMARY

In a first aspect, a defect detection sensor is provided in the present disclosure. The defect detection sensor includes an orthogonal differential detection unit, a quantum magnetometer, and a magnetic shielding cylinder. The quantum magnetometer is disposed inside the magnetic shielding cylinder, and the orthogonal differential detection unit is disposed outside the magnetic shielding cylinder. The orthogonal differential detection unit is configured to acquire a first magnetic field variation signal on a surface of a preset region of a preset component, and transmit the first magnetic field variation signal to the quantum magnetometer, so as to apply the first magnetic field variation signal to alkali metal atoms of the quantum magnetometer. The quantum magnetometer is configured to generate, in response to the first magnetic field variation signal being applied to the alkali metal atoms of the quantum magnetometer, a second magnetic field variation signal, so as to determine, based on the second magnetic field variation signal, whether a defect exists in the preset region of the preset component.

In a second aspect, a defect detection method is further provided in the present disclosure. The defect detection method includes: acquiring, by an orthogonal differential detection unit, a first magnetic field variation signal on a surface of a preset region of a preset component, and transmitting the first magnetic field variation signal to a quantum magnetometer, to apply the first magnetic field variation signal to alkali metal atoms of the quantum magnetometer; and generating, by the quantum magnetometer, a second magnetic field variation signal in response to the first magnetic field variation signal being applied to the alkali metal atoms of the quantum magnetometer, to determine, based on the second magnetic field variation signal, whether a defect exists in the preset region of the preset component.

In a third aspect, a defect detection system is further provided in the present disclosure. The defect detection system includes a defect detection sensor and a communication module. The defect detection sensor includes an orthogonal differential detection unit, a quantum magnetometer, and a magnetic shielding cylinder. The quantum magnetometer is disposed inside the magnetic shielding cylinder, and the orthogonal differential detection unit is disposed outside the magnetic shielding cylinder. The orthogonal differential detection unit is configured to acquire a first magnetic field variation signal on a surface of a preset region of a preset component, and transmit the first magnetic field variation signal to the quantum magnetometer, so as to apply the first magnetic field variation signal to alkali metal atoms of the quantum magnetometer. The quantum magnetometer is configured to generate, in response to the first magnetic field variation signal being applied to the alkali metal atoms of the quantum magnetometer, a second magnetic field variation signal, so as to determine whether a defect exists in the preset region of the preset component based on the second magnetic field variation signal. The communication module is configured to transmit the second magnetic field variation signal.

### BRIEF DESCRIPTION OF THE DRAWINGS

FIG. 1 is a schematic diagram showing a structure of a defect detection sensor based on quantum technology, in accordance with embodiments of the present disclosure;
FIG. 2 is a block diagram of a defect detection system based on quantum technology, in accordance with embodiments of the present disclosure;
FIG. 3 is a schematic diagram showing a structure of an orthogonal differential detection unit;
FIG. 4 is a schematic diagram showing a structure of a packaged orthogonal differential detection unit;
FIG. 5 is a flow diagram of a defect detection method, in accordance with embodiments of the present disclosure; and
FIG. 6 is another flow diagram of a defect detection method, in accordance with embodiments of the present disclosure.

### DETAILED DESCRIPTION

To make the objectives, technical solutions, and advantages of the present disclosure clear, the embodiments of the present disclosure will be described in further detail below with reference to the accompanying drawings.

Quantum electromagnetic technology is an emerging high-tech detection technology. The quantum electromagnetic technology may, based on atomic magnetometers relying on quantum spin measurement, perform extremely sensitive measurements on magnetic fields by detecting quantum states of atoms in a magnetic field, thereby enabling precise measurement and control of the microscopic structures and motions of substances. This technology has a wide range of applications in fields such as biomedicine, material science, and energy exploration. The application of quantum electromagnetic technology in the field of oil and gas pipeline internal inspection, especially in the detection of ultra-micro cracks on pipelines at large burial depths, is still rare. The related oil and gas pipeline internal inspection technologies mainly include ultrasonic testing, magnetic flux leakage testing, and eddy current testing. These technologies primarily determine whether a defect exists on a pipeline by detecting relatively macroscopic physical properties of the pipeline. However, these technologies are often unable to accurately detect micro defects, such as ultra-micro cracks. The related oil and gas pipeline inspection technologies present the following two major problems.
1) Traditional pipeline internal inspection sensors, especially those adopting electromagnetic sensing technology, are limited by sensing technologies such as Hall elements and coils when identifying pipeline defects, making it difficult to break through the current inspection bottleneck. For example, for current pipeline internal inspection technologies, a minimum detectable opening width for girth weld cracks is 0.3 mm and a minimum detectable diameter for pinholes is 3 mm, and the current pipeline internal inspection technologies are incapable of accurately detecting smaller cracks, buried crack defects, and extremely tiny pinholes. In other words, the related art has limited detection capability in detecting micro defects, especially for ultra-micro cracks on pipelines at large burial depths, which the related art often fails to detect accurately.
2) The detection results of the related art usually require manual analysis and judgment, which is not only time-consuming and labor-intensive, but also highly subjective, and is prone to misjudgment and missed detection.

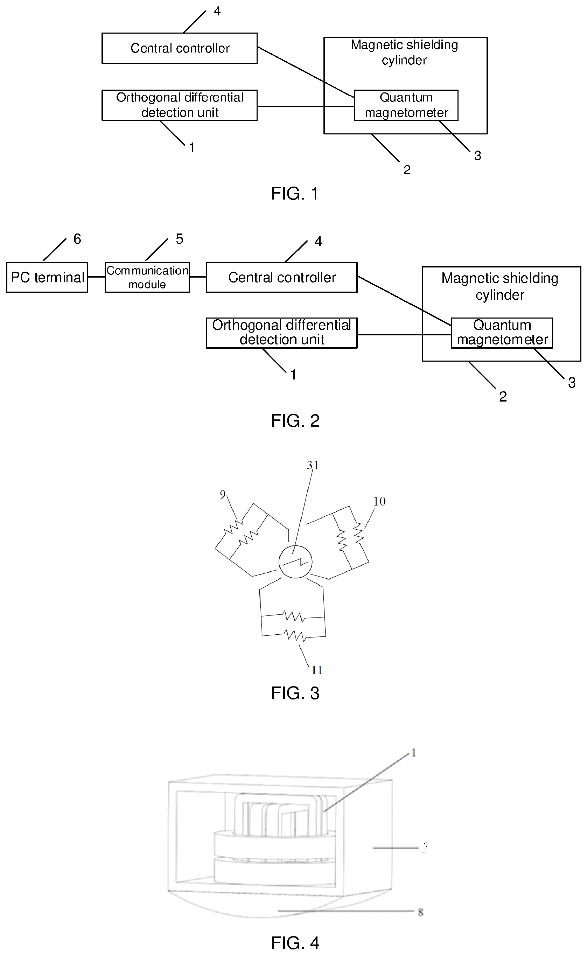

As shown in FIG. 1, a defect detection sensor based on quantum technology in the embodiments of the present disclosure includes an orthogonal differential detection unit 1, a quantum magnetometer 3, and a magnetic shielding cylinder 2. The quantum magnetometer 3 is disposed inside the magnetic shielding cylinder 2, and the orthogonal differential detection unit 1 is disposed outside the magnetic shielding cylinder 2. The defect detection sensor may further include: a central controller 4. The magnetic shielding cylinder 2 may include a relative zero-magnetic shielding cylinder. The relative zero-magnetic shielding cylinder is a device that creates a near-zero magnetic field environment using a plurality of layers of materials with high magnetic permeability. The relative zero-magnetic shielding cylinder shields against interference from conventional geomagnetic noise signals, effectively improves a signal-to-noise ratio of the quantum magnetometer, and facilitates the dedicated analysis of magnetic signals at defect locations.

The orthogonal differential detection unit 1 is configured to acquire a first magnetic field variation signal on a surface of a preset region of a preset component, and transmit the first magnetic field variation signal to the quantum magnetometer 3, so as to apply the first magnetic field variation signal to alkali metal atoms of the quantum magnetometer 3. In a case where a defect appears on the surface of the preset region of the preset component, the magnetic field signal on the surface of the preset region of the preset component changes compared with that on surfaces of other regions without defects, thereby generating the first magnetic field variation signal. For example, the first magnetic field variation signal is input into the quantum magnetometer 3, to generate a corresponding magnetic field signal, so that the alkali metal atoms undergo Larmor precession. The orthogonal differential detection unit 1 transmits the first magnetic field variation signal to the quantum magnetometer 3 via a signal line.

The quantum magnetometer 3 is configured to irradiate the alkali metal atoms with a laser beam, so as to enable outer electrons of the alkali metal atoms to undergo spin polarization. In a case where the first magnetic field variation signal is applied to the alkali metal atoms of the quantum magnetometer 3, the alkali metal atoms undergo Larmor precession, so as to generate a nuclear magnetic resonance signal. A second magnetic field variation signal is obtained after analysis of an electromagnetic signal in the nuclear magnetic resonance signal, and is transmitted to the central controller 4.

The quantum magnetometer 3 includes a laser excitation source and an electromagnetic signal acquisition source 31. The laser excitation source is configured to irradiate the alkali metal atoms with a laser beam, so as to enable the outer electrons of the alkali metal atoms to undergo spin polarization. The electromagnetic signal acquisition source 31 is configured to acquire, in response to the alkali metal atoms undergoing Larmor precession, the second magnetic field variation signal.

The quantum magnetometer 3 (e.g., an atomic magnetometer) disposed inside the magnetic shielding cylinder 2 serves as a core sensor. The atomic magnetometer has a magnetic field sensitivity of 10^{-15T}, and is capable of accurately detecting quantum states of atoms in the magnetic field.

The central controller 4 is configured to analyze the second magnetic field variation signal to determine whether a defect exists in the preset region of the preset component. The defect may include a crack or the like.

In some embodiments, in the technical solutions described above, the central controller 4 is further configured to analyze, in response to the defect existing in the preset region of the preset component, the second magnetic field variation signal to determine a location of the defect.

The central controller 4 performs preprocessing and integration on data (i.e., the second magnetic field variation signal) by means of noise reduction algorithms such as empirical mode decomposition and machine learning. A plurality of intrinsic material properties of the material used in the preset component are accurately obtained by deduction based on physical mechanisms. With the aid of an algorithm of an artificial intelligence joint defect feature detection model, high-precision detection of the defect and defect location of the preset component may be achieved. In combination with multi-channel and multi-dimensional image processing algorithms, visualization and indexation of underlying quantum detection information data may be achieved, thereby providing efficient decision-making information for application parties. For example, the first magnetic field variation signal is acquired by coils or Hall elements, with magnetic field strength as the unit; then, the acquired first magnetic field variation signal is amplified and filtered before being transmitted to the quantum magnetometer 3; the quantum magnetometer 3 generates the second magnetic field variation signal based on the first magnetic field variation signal; finally, on the basis of the second magnetic field variation signal, conversion between magnetic signals and electrical signals is performed, and a defect feature is quantified based on amplitudes of the electrical signals.

As shown in FIG. 2, a defect detection system (a probe) is provided in the embodiments of the present disclosure. The defect detection system includes a defect detection sensor and a communication module. The defect detection sensor includes an orthogonal differential detection unit 1, a quantum magnetometer 3, and a magnetic shielding cylinder 2. The quantum magnetometer 3 is disposed inside the magnetic shielding cylinder 2, and the orthogonal differential detection unit 1 is disposed outside the magnetic shielding cylinder 2.

The orthogonal differential detection unit 1 is configured to acquire a first magnetic field variation signal on a surface of a preset region of a preset component, and transmit the first magnetic field variation signal to the quantum magnetometer 3, so as to apply the first magnetic field variation signal to alkali metal atoms of the quantum magnetometer.

The quantum magnetometer 3 is configured to generate, in response to the first magnetic field variation signal being applied to the alkali metal atoms of the quantum magnetometer, a second magnetic field variation signal, so as to determine, based on the second magnetic field variation signal, whether a defect exists in the preset region of the preset component.

The communication module 5 is configured to transmit the second magnetic field variation signal.

The defect detection system further includes a personal computer. The personal computer is configured to receive the second magnetic field variation signal transmitted by the communication module 5.

In an embodiment, the central controller 4 transmits the second magnetic field variation signal to a personal computer (PC) terminal 6 via the communication module 5 by means of wired or wireless communication. The PC terminal 6 analyzes the second magnetic field variation signal, to determine whether a defect exists in the preset region of the preset component. In a case where a defect exists in the preset region of the preset component, the PC terminal 6 analyzes the second magnetic field variation signal, to determine a location of the defect.

The PC terminal 6 may visually display the location of the defect in the preset region of the preset component via image processing software, which facilitates viewing, understanding and application.

In a case where the central controller 4 transmits the second magnetic field variation signal to the PC terminal 6 via the communication module 5, the central controller 4 may adopt Transmission Control Protocol/Internet Protocol (TCP/IP). Moreover, the communication module 5 may perform transmission via a plurality of channels, to facilitate parallel data transmission, thereby improving data transmission efficiency.

In addition, the orthogonal differential detection unit 1, the magnetic shielding cylinder 2, and the quantum magnetometer 3 may be integrated together to serve as an electromagnetic detection module.

The preset component may include an oil and gas pipeline, or may be specified according to actual conditions.

In some embodiments, in the technical solutions described above, the first magnetic field variation signal includes magnetic field variation signals in different directions. The orthogonal differential detection unit 1 (also referred to as a triaxial differential detection coil) includes three sets of mutually orthogonal detection coils. Coils in each set of detection coils are placed in parallel and connected in reverse series. The sets of detection coils acquire magnetic field variation signals in different directions, respectively. A structure of the orthogonal differential detection unit 1 is shown in FIG. 3. The three sets of mutually orthogonal detection coils are divided into: a set of coils 9 for acquiring a magnetic field variation signal in an X-axis direction, a set of coils 10 for acquiring a magnetic field variation signal in a Y-axis direction, and a set of coils 11 for acquiring a magnetic field variation signal in a Z-axis direction. There is at least one set of coils 9 for acquiring the magnetic field variation signal in the X-axis direction, at least one set of coils 10 for acquiring the magnetic field variation signal in the Y-axis direction, and at least one set of coils 11 for acquiring the magnetic field variation signal in the Z-axis direction. The magnetic field variation signals acquired by the orthogonal differential detection unit 1 are further acquired by the electromagnetic signal acquisition source 31 of the quantum magnetometer 3. By adopting the reverse series connection of the triaxial differential detection coil, conventional signal noise is reduced, the detection capability for multi-dimensional spatial magnetic field is improved, and the occurrence of missed detection is prevented.

The orthogonal differential detection unit 1 includes three sets of mutually orthogonal detection coils, and the three sets of mutually orthogonal detection coils acquire magnetic fields in the X, Y and Z directions, respectively. The coils in each set of detection coils are placed in parallel and connected in reverse series. The orthogonal differential detection unit 1 is connected to the quantum magnetometer 3 inside the magnetic shielding cylinder 2. Under normal pipeline wall detection conditions, the differential detection coils in each of the three directions are connected in reverse series, and the corresponding differential detection signal is equal to zero. When the orthogonal differential detection unit 1 passes over a defect, spatial magnetic field disturbances generated at the defect are acquired by the three sets of mutually orthogonal detection coils, thereby acquiring the magnetic field variation signal in the X direction, the magnetic field variation signal in the Y direction, and the magnetic field variation signal in the Z direction. The magnetic field variations in the three directions are significantly different. The direction with the most significant magnetic field variation is selected for feature extraction, to characterize the value of the magnetic field variation at the defect. By acquiring the magnetic field variations in the three-dimensional XYZ space, the detection of the defect becomes comprehensive in terms of dimensionality.

In some embodiments, in the technical solutions described above, in a case where the defect detection sensor includes a plurality of orthogonal differential detection units 1, each orthogonal differential detection unit 1 transmits, via a time-division multiplexing module, a first magnetic field variation signal on a surface of a different preset region of the preset component acquired by itself to the quantum magnetometer 3. Then, the quantum magnetometer 3 may acquire the second magnetic field variation signal, and the time-division multiplexing module is configured to transmit the signal data acquired by each orthogonal differential detection unit 1 to the quantum magnetometer 3 in turn according to a preset order.

The time-division multiplexing module is a data acquisition card (data acquisition device) capable of simultaneously acquiring and transmitting multi-channel data. A data acquisition card matching the actual conditions may be selected as the time-division multiplexing module. The number of sensors in the layout may be expanded by using the time-division multiplexing module.

In some embodiments, in the technical solutions described above, as shown in FIG. 4, the defect detection sensor based on quantum technology further includes a protective housing 7. The orthogonal differential detection unit 1 is located inside the protective housing 7, and the preset component includes an oil and gas pipeline.

In some embodiments, as shown in FIG. 4, the defect detection sensor based on quantum technology further includes an arc-shaped ceramic wear-resistant plate 8. The arc-shaped ceramic wear-resistant plate 8 is embedded in a bottom portion of the protective housing 7 as a base. In a case where defect detection is performed on the oil and gas pipeline, the arc-shaped ceramic wear-resistant plate 8 is used to contact an inner wall of the oil and gas pipeline, thereby providing protection.

In a case where the preset component includes the oil and gas pipeline, the arc-shaped ceramic wear-resistant plate 8 may be designed with the corresponding curvature based on an inner diameter of the oil and gas pipeline. Such design may help to reduce the wear of the orthogonal differential detection unit 1 during long-term sliding. Moreover, the contoured structure ensures a degree of fitting between the orthogonal differential detection unit 1 and the pipeline wall, reduces a sensor lift-off value, and reduces traveling jitter. The ceramic material ensures the wear resistance and stability of the sensor during long-distance operation, which may effectively extend the service life of the product.

To improve the overall signal-to-noise ratio and anti-interference capability, the magnetic shielding cylinder 2 accommodates the quantum magnetometer 3 with ultra-high sensitivity. The magnetic field variation signals in three directions detected by the orthogonal differential detection unit 1 are transmitted to the quantum magnetometer 3 after passing through the magnetic shielding cylinder. The quantum magnetometer 3 measures, based on quantum spin measurement, the magnetic field by adopting the principles of optical excitation and optical detection. By exciting atoms in an atomic vapor cell and measuring the changes in their polarization states, the intensity and direction of the surrounding magnetic field may be indirectly measured, so that the quantum magnetometer features high sensitivity and fast response.

The beneficial effects of the defect detection sensor based on quantum technology provided in the present disclosure are as follows: the atomic magnetometer features high sensitivity and fast response, and may measure magnetic field variation intensities at the picotesla (pT) level or even lower, achieving the acquisition of electromagnetic signal changes of ultra-micro cracks and pinholes. This technology has a wide detection frequency domain, and may ensure the detection rate and recovery rate for defect detection signals from deeply buried pipelines through low-frequency high-penetration technology. Moreover, in order to improve the signal-to-noise ratio and anti-interference capability of the detection signals, a combination of the magnetic shielding cylinder and the orthogonal differential detection unit is adopted. Such combination ensures the stability of the detection signals at a normal pipeline section and makes the electromagnetic signal changes at a pipeline section with an abnormal state prominent and interpretable. Such combination overcomes the problems in the application of conventional pipeline electromagnetic internal inspection technologies, including insufficient sensitivity, narrow detection frequency bandwidth, complex structure, and high power consumption, thereby improving the sensitivity and reliability of oil and gas pipeline internal inspection and substantially reducing the missed detection rate of pipeline defects.

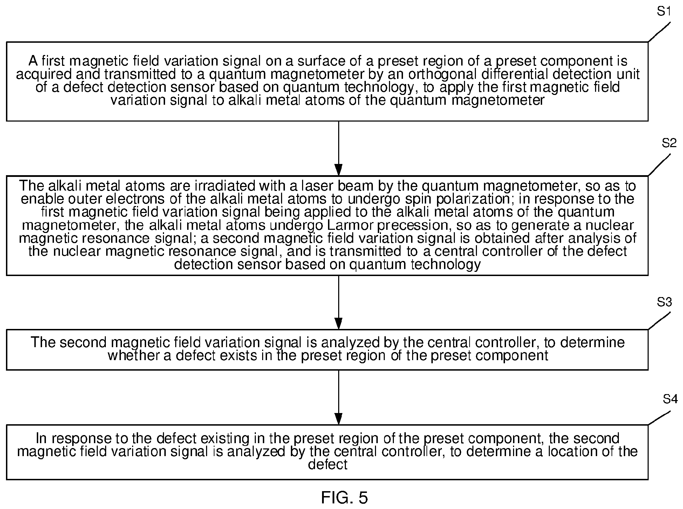

As shown in FIG. 5, a defect detection method is provided in the embodiments of the present disclosure. The defect detection method adopts the defect detection sensor based on quantum technology described above, and includes the following S1 to S3.

In S1, a first magnetic field variation signal on a surface of a preset region of a preset component is acquired and transmitted to a quantum magnetometer 3 by an orthogonal differential detection unit 1 of the defect detection sensor based on quantum technology, and the first magnetic field variation signal is applied to alkali metal atoms of the quantum magnetometer 3. The quantum magnetometer 3 is disposed inside a magnetic shielding cylinder 2, and the orthogonal differential detection unit 1 is disposed outside the magnetic shielding cylinder 2.

In S2, the alkali metal atoms are irradiated with a laser beam by the quantum magnetometer 3, so as to enable outer electrons of the alkali metal atoms to undergo spin polarization. In a case where the first magnetic field variation signal is applied to the alkali metal atoms of the quantum magnetometer 3, the alkali metal atoms undergo Larmor precession, so as to generate a nuclear magnetic resonance signal. A second magnetic field variation signal is obtained after analysis of the nuclear magnetic resonance signal, and is transmitted to the central controller 4 of the defect detection sensor based on quantum technology.

In S3, the second magnetic field variation signal is analyzed by the central controller 4, to determine whether a defect exists in the preset region of the preset component.

In some embodiments, in the technical solutions described above, the defect detection method further includes S4.

In S4, in response to the defect existing in the preset region of the preset component, the second magnetic field variation signal is analyzed by the central controller 4, to determine a location of the defect.

In some embodiments, in the technical solutions described above, the first magnetic field variation signal includes magnetic field variation signals in different directions. The orthogonal differential detection unit 1 includes three sets of mutually orthogonal detection coils. Coils in each set of detection coils are placed in parallel and connected in reverse series. The sets of detection coils acquire magnetic field variation signals in different directions, respectively.

In some embodiments, in the technical solutions described above, in a case where the defect detection sensor includes a plurality of orthogonal differential detection units 1, each orthogonal differential detection unit 1 transmits, via a time-division multiplexing module, a first magnetic field variation signal on a surface of a different preset region of the preset component acquired by itself to the quantum magnetometer 3.

In some embodiments, in the technical solutions described above, the defect detection sensor based on quantum technology further includes a protective housing 7. The orthogonal differential detection unit 1 is located inside the protective housing 7, and the preset component includes an oil and gas pipeline.

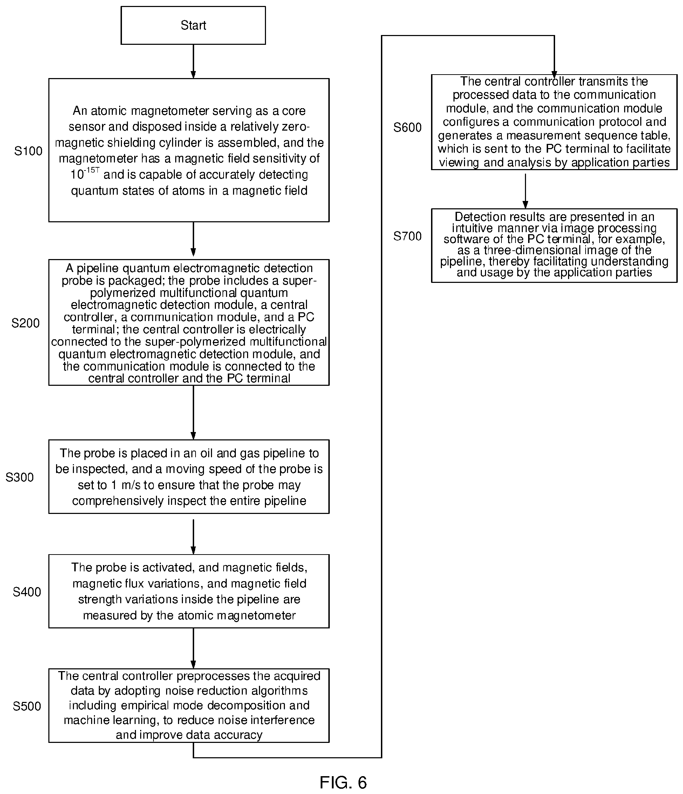

In some embodiments, the orthogonal differential detection unit 1 is placed in the oil and gas pipeline to be inspected, and a moving speed of the orthogonal differential detection unit 1 is set to 1 m/s to ensure that the orthogonal differential detection unit 1 may comprehensively inspect the entire pipeline. An exemplary defect detection method in the present disclosure is described based on FIG. 6. As shown in FIG. 6, the exemplary defect detection method includes the following steps S100 to S700.

In S100, an atomic magnetometer serving as a core sensor and disposed inside a relatively zero-magnetic shielding cylinder is assembled. The magnetometer has a magnetic field sensitivity of 10^{-15T} and is capable of accurately detecting quantum states of atoms in a magnetic field.

In S200, a pipeline quantum electromagnetic detection probe is packaged. The probe includes a super-polymerized multifunctional quantum electromagnetic detection module, a central controller, a communication module, and a PC terminal. The central controller is electrically connected to the super-polymerized multifunctional quantum electromagnetic detection module, and the communication module is connected to the central controller and the PC terminal.

In S300, the probe is placed in the oil and gas pipeline to be inspected, and a moving speed of the probe is set to 1 m/s to ensure that the probe may comprehensively inspect the entire pipeline.

In S400, the probe is activated, and magnetic fields, magnetic flux variations, and magnetic field strength variations inside the pipeline are measured by the atomic magnetometer.

In S500, the central controller preprocesses the acquired data by adopting noise reduction algorithms including empirical mode decomposition and machine learning, to reduce noise interference and improve data accuracy.

In S600, the central controller transmits the processed data to the communication module. The communication module configures a communication protocol and generates a measurement sequence table, which is sent to the PC terminal to facilitate viewing and analysis by application parties.

In S700, detection results are presented in an intuitive manner via image processing software of the PC terminal, for example, as a three-dimensional image of the pipeline, thereby facilitating understanding and usage by the application parties.

In the present disclosure, terms such as "first" and "second" are used merely for descriptive purposes, and are not to be construed as indicating or implying a relative importance or implicitly indicating a number of indicated technical features. Thus, a feature defined by the term "first" or "second" may explicitly or implicitly include at least one such feature. In the description of the present disclosure, the term such as "a/the plurality of" means at least two, such as two, three and so on, unless otherwise explicitly and specifically limited.

In the description of the specification, the description with reference to the terms "an embodiment", "some embodiments", "example", "specific example", or "some examples" and so on means that a specific feature, structure, material or characteristic described with reference to the embodiment or example are included in at least one embodiment or example of the present disclosure. In the specification, exemplary descriptions of the foregoing terms do not necessarily refer to the same embodiment or example. Moreover, the described specific features, structure, materials, or characteristics may be combined in a proper manner in any one or more of the embodiments or examples. In addition, those skilled in the art may combine and assemble different embodiments or examples as well as features of different embodiments or examples described in this specification, provided that no conflict exists therebetween.

Although the embodiments of the present disclosure have been shown and described above, it may be understood that the embodiments described above are exemplary and will not be construed as limitations on the present disclosure. A person of ordinary skill in the art may make variations, modifications, substitutions and alterations to the embodiments described above within the scope of the present disclosure.

## Claims

1. A defect detection sensor, comprising an orthogonal differential detection unit, a quantum magnetometer, and a magnetic shielding cylinder, wherein the quantum magnetometer is disposed inside the magnetic shielding cylinder, and the orthogonal differential detection unit is disposed outside the magnetic shielding cylinder;
wherein the orthogonal differential detection unit is configured to acquire a first magnetic field variation signal on a surface of a preset region of a preset component, and transmit the first magnetic field variation signal to the quantum magnetometer, so as to apply the first magnetic field variation signal to alkali metal atoms of the quantum magnetometer; and
the quantum magnetometer is configured to generate, in response to the first magnetic field variation signal being applied to the alkali metal atoms of the quantum magnetometer, a second magnetic field variation signal, so as to determine, based on the second magnetic field variation signal, whether a defect exists in the preset region of the preset component.

2. The defect detection sensor according to claim 1, wherein the quantum magnetometer includes a laser excitation source and an electromagnetic signal acquisition source;
the laser excitation source is configured to irradiate the alkali metal atoms with a laser beam, so as to enable outer electrons of the alkali metal atoms to undergo spin polarization, so that in response to the first magnetic field variation signal being applied to the spin-polarized alkali metal atoms, the alkali metal atoms undergo Larmor precession; and
the electromagnetic signal acquisition source is configured to acquire, in response to the alkali metal atoms undergoing Larmor precession, the generated second magnetic field variation signal.

3. The defect detection sensor according to claim 2, further comprising a central controller, wherein the central controller is configured to receive the second magnetic field variation signal transmitted by the quantum magnetometer, to analyze the second magnetic field variation signal, and determine, based on an electrical signal amplitude of the second magnetic field variation signal, whether the defect exists in the preset region of the preset component.

4. The defect detection sensor according to claim 3, wherein the central controller is further configured to analyze, in response to the defect existing in the preset region of the preset component, the second magnetic field variation signal to determine a location of the defect.

5. The defect detection sensor according to claim 1, wherein the orthogonal differential detection unit includes three sets of mutually orthogonal detection coils, coils in each of the three sets of detection coils are placed in parallel and connected in reverse series, and the three sets of detection coils acquire magnetic field variation signals in different directions, respectively, so as to enable the first magnetic field variation signal to include the magnetic field variation signals in different directions.

6. The defect detection sensor according to any one of claims 1 to 5, wherein in a case where the defect detection sensor comprises a plurality of orthogonal differential detection units, a first magnetic field variation signal on a surface of a different preset region of the preset component acquired by each of the plurality of orthogonal differential detection units is transmitted to the quantum magnetometer via a time-division multiplexing module.

7. The defect detection sensor according to any one of claims 1 to 6, further comprising a protective housing, wherein the orthogonal differential detection unit is located inside the protective housing.

8. The defect detection sensor according to any one of claims 1 to 7, further comprising a base, wherein the base fits against the preset component in a contoured manner.

9. The defect detection sensor according to claim 8, wherein the base is made of ceramic material.

10. The defect detection sensor according to claim 1, wherein the preset component includes an oil and gas pipeline.

11. The defect detection sensor according to claim 10, further comprising a base, wherein the base is in a shape of an arc, to fit against the oil and gas pipeline.

12. The defect detection sensor according to claim 1, wherein the magnetic shielding cylinder includes a relative zero-magnetic shielding cylinder.

13. A defect detection method, performed by a defect detection sensor, wherein the defect detection sensor includes an orthogonal differential detection unit, a quantum magnetometer, and a magnetic shielding cylinder, the quantum magnetometer is disposed inside the magnetic shielding cylinder, and the orthogonal differential detection unit is disposed outside the magnetic shielding cylinder; the method comprises:
acquiring, by the orthogonal differential detection unit, a first magnetic field variation signal on a surface of a preset region of a preset component, and transmitting the first magnetic field variation signal to the quantum magnetometer, to apply the first magnetic field variation signal to alkali metal atoms of the quantum magnetometer; and
generating, by the quantum magnetometer, a second magnetic field variation signal in response to the first magnetic field variation signal being applied to the alkali metal atoms of the quantum magnetometer, to determine, based on an electrical signal amplitude of the second magnetic field variation signal, whether a defect exists in the preset region of the preset component.

14. The defect detection method according to claim 13, wherein the quantum magnetometer includes a laser excitation source and an electromagnetic signal acquisition source, and the method comprises:
irradiating, by the laser excitation source, the alkali metal atoms with a laser beam, so as to enable outer electrons of the alkali metal atoms to undergo spin polarization, so that in response to the first magnetic field variation signal being applied to the spin-polarized alkali metal atoms, the alkali metal atoms undergo Larmor precession; and
acquiring, by the electromagnetic signal acquisition source, the generated second magnetic field variation signal in response to the alkali metal atoms undergoing Larmor precession.

15. The defect detection method according to claim 14, wherein the defect detection sensor further includes a central controller, and the method further comprises:
receiving, by the central controller, the second magnetic field variation signal transmitted by the quantum magnetometer, to analyze the second magnetic field variation signal and determine whether the defect exists in the preset region of the preset component.

16. The defect detection method according to claim 15, wherein the central controller is further configured to analyze, in response to the defect existing in the preset region of the preset component, the second magnetic field variation signal to determine a location of the defect.

17. The defect detection method according to claim 13, wherein the orthogonal differential detection unit includes three sets of mutually orthogonal detection coils, coils in each of the three sets of detection coils are placed in parallel and connected in reverse series, and the method further comprises:
acquiring, by the three sets of detection coils, magnetic field variation signals in different directions, respectively, so as to enable the first magnetic field variation signal to include the magnetic field variation signals in different directions.

18. The defect detection method according to any one of claims 13 to 17, wherein in a case where the defect detection sensor includes a plurality of orthogonal differential detection units, the method comprises:
transmitting, by a time-division multiplexing module, a first magnetic field variation signal on a surface of a different preset region of the preset component acquired by each of the plurality of orthogonal differential detection units to the quantum magnetometer.

19. A defect detection system, comprising a defect detection sensor and a communication module, wherein the defect detection sensor includes an orthogonal differential detection unit, a quantum magnetometer, and a magnetic shielding cylinder, the quantum magnetometer is disposed inside the magnetic shielding cylinder, and the orthogonal differential detection unit is disposed outside the magnetic shielding cylinder;
the orthogonal differential detection unit is configured to acquire a first magnetic field variation signal on a surface of a preset region of a preset component, and transmit the first magnetic field variation signal to the quantum magnetometer, so as to apply the first magnetic field variation signal to alkali metal atoms of the quantum magnetometer;
the quantum magnetometer is configured to generate, in response to the first magnetic field variation signal being applied to the alkali metal atoms of the quantum magnetometer, a second magnetic field variation signal, so as to determine, based on the second magnetic field variation signal, whether a defect exists in the preset region of the preset component; and
the communication module is configured to transmit the second magnetic field variation signal.

20. The defect detection system according to claim 19, further comprising a personal computer, wherein the personal computer is configured to receive the second magnetic field variation signal transmitted by the communication module.
